(19) **Europäisches Patentamt**

**European Patent Office**

**Office européen des brevets**

(11) **EP 1 284 055 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(21) Anmeldenummer: **01947170.5**

(22) Anmeldetag: **22.05.2001**

(51) Int Cl.⁷: **H04B 7/06**

(86) Internationale Anmeldenummer:
**PCT/DE2001/001970**

(87) Internationale Veröffentlichungsnummer:
**WO 2001/091325 (29.11.2001 Gazette 2001/48)**

(54) **VERFAHREN ZUM STEUERN DER DOWNLINK-STRAHLFORMUNG**

METHOD FOR CONTROLLING THE FORMATION OF A DOWNLINK BEAM

PROCEDE DE COMMANDE DE LA FORMATION DE FAISCEAU DE LIAISON DESCENDANTE

(84) Benannte Vertragsstaaten:
**DE ES FR GB IT TR**

(30) Priorität: **25.05.2000 DE 10025987**

(43) Veröffentlichungstag der Anmeldung:
**19.02.2003 Patentblatt 2003/08**

(73) Patentinhaber: **SIEMENS AKTIENGESELLSCHAFT**
**80333 München (DE)**

(72) Erfinder:
• **BRUNNER, Christopher**
**54516 Wittlich (DE)**
• **SEEGER, Alexander**
**85622 Feldkirchen (DE)**

(56) Entgegenhaltungen:
**EP-A- 0 817 308        WO-A-98/27669**
**WO-A-99/35764**

**Beschreibung**

Die Erfindung betrifft ein Verfahren zum Steuern der Downlink-Strahlformung in einem Funk-Kommunikationssystem mit einer mehrere Antennenelemente umfassenden Antenneneinrichtung.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von einer Basisstation zu einer Teilnehmerstation, als auch in Aufwärtsrichtung (uplink) von der Teilnehmerstation zur Basisstation.

Signale, die mit den elektromagnetischen Wellen übertragen werden, unterliegen bei ihrer Ausbreitung in einem Ausbreitungsmedium u.a. Störungen durch Interferenzen. Störungen durch Rauschen können u.a. durch Rauschen der Eingangsstufe des Empfängers entstehen. Durch Beugungen und Reflektionen durchlaufen Signalkomponenten verschiedene Ausbreitungswege. Dies hat zum einen die Folge, daß ein Signal am Empfänger oft ein Gemisch von mehreren Beiträgen ist, die zwar von einem gleichen Sendesignal herrühren, die aber den Empfänger mehrfach,' jeweils aus unterschiedlichen Richtungen, mit unterschiedlichen Verzögerungen, Dämpfungen und Phasenlagen erreichen können. Zum anderen können Beiträge des Empfangssignals kohärent mit wechselnden Phasenbeziehungen beim Empfänger mit sich selbst interferieren und dort zu Auslöschungseffekten auf einem kurzfristigen Zeitmaßstab (fast fading) führen.

Es gibt zwei Klassen von Verfahren, um durch Verwendung von Antenneneinrichtungen mit mehreren Elementen durch schnelles Fading verursachte Übertragungsstörungen bzw. -unterbrechungen zu bekämpfen.

Die erste Gruppe basiert auf Diversitätstechniken, was vereinfacht gesagt bedeutet, daß das Downlink-Signal auf unterschiedlichen Kanälen zeitgleich übertragen wird, in der Erwartung, daß wenigstens einer dieser Kanäle an der Teilnehmerstation empfangbar sein wird. Es sind verschiedene Diversitätstechniken bekannt, z.B. Code-Diversität (Code Division Transmission Diversity (CDTD, auch als Orthogonal Transmit Diversity (OTD) bezeichnet), "zeitlich geschaltete Übertragungsdiversität" (Time Switch Transmission Diversity TSTD) oder Auswahlübertragungsdiversität (Selection Transmission Diversity STD). Diese Techniken sind z. B. in Raitola et.al., Transmission Diversity in Whiteband CDMA, Proceedings of 49th IEEE Vehicular Technology Conference (VTC'99 - Spring) Houston, Texas beschrieben. Übertragung mit Code-Diversität unter Anwendung von Space Time Block Codes sowie von TSTD ist auch in die Spezifikationen des Third Generation Partnership Project für Mobilfunknetze der 3. Generation aufgenommen worden, siehe 3GTS 25.211 Version 3.1.1 (Technical Specification Group Radio Access Network: Physical Channels and Mapping of Transport Channels onto Physical Channels (FDD), Version 3.1.0, Dezember 1999).

Code-Diversität bedeutet, daß jedes Antennenelement der Antenneneinrichtung die gleiche Nutzdatenfolge ausstrahlt, allerdings jeweils unter Verwendung eines anderen orthogonalen Codes codiert. Dabei gewährleistet insbesondere die Verwendung von Space Time Block Codes zur Codierung, daß die Beiträge unterschiedlicher Antennenelemente zum Downlink-Signal sich am Ort des Empfängers nicht gegenseitig auslöschen können. Die Selbstauslöschung eines einzelnen Beitrags ist jedoch nicht ausgeschlossen.

Bei TSTD wird das Downlink-Signal von unterschiedlichen Antennenelementen der Antenneneinrichtung jeweils im zeitlichen Wechsel nach einem vorgegebenen Muster ausgestrahlt.

Diesen Diversitätstechniken ist gemein, daß eine Rückmeldung darüber, mit welcher Qualität der Beitrag der einzelnen Antennenelemente am Empfänger eintrifft, unterbleibt, und daß deshalb die Verteilung von Sendeleistung auf die einzelnen Antennenelemente beim Sender praktisch "blind" erfolgen muß. Diese Techniken verfolgen also gewissermaßen eine Strategie der Risikostreuung: da auf seiten des Senders nicht bekannt ist, welcher von mehreren verfügbaren Codes oder welches Antennenelement zu einem gegebenen Zeitpunkt die beste Übertragung ermöglicht, werden mehrere Codes oder mehrere Antennenelemente gleichzeitig bzw. in schnellem Wechsel eingesetzt, in der Erwartung, daß dadurch eine zwar nicht optimale aber brauchbare Übertragungsqualität im Mittel erreicht wird.

Bei Auswahl-Übertragungsdiversität (STD), ebenfalls bei Raitola, a.a.O. beschrieben, wird auf Grundlage von Rückmeldungen über die Empfangsqualität vom Empfänger an den Sender zwischen Sender-Antennenelementen hin und her geschaltet. Diese Technik erlaubt es, die Verwendung von Antennenelementen, die zu einem gegebenen Zeitpunkt keine befriedigende Übertragung ermöglichen, gezielt zu vermeiden und die gesamte mittlere Sendeleistung des Senders zu reduzieren.

Falls sich der Übertragungskanal nur langsam ändert, besteht ferner die Möglichkeit, daß der Empfänger Gewichtungsvektoren ermittelt, mit denen die von den einzelnen Antennenelementen ausgestrahlten Beiträge des Downlink-Signals senderseitig gemittelt werden sollten, um ein optimales Signal-Stör-Verhältnis zu ergeben, und diese Gewichtungswerte an den Sender zu übertragen.

All diesen Ansätzen ist gemeinsam, daß sie nur für Antenneneinrichtungen mit maximal zwei Antennenelementen tauglich sind. Wenn nämlich Gewichtungsvektoren ermittelt und an den Sender übertragen werden müssen, nimmt die dafür benötigte Bandbreite mit der Zahl der Antennenelmente zu; die tatsächlich für eine solche Übertragung verfügbare Bandbreite ist jedoch eng begrenzt. Daher wird die Steuerung durch rückübertragene Gewichtungsvektoren um so träger, je mehr Antennenelemente beteiligt sind. Bei den Diversitätstechniken wie OTD, TSTD, erreicht man zwar durch Verwednung zusätzlicher Antennenelemente einen Diversitätsgewinn; dieser ist jedoch beim Übergang von zwei auf vier Antennenelemente deutlich geringer als beim Übergang von einem Antennenelement auf zwei, d.h. die durch die Steigerung der Zahl der Antennenelemente erzielbaren Vorteile sind gering im Verhältnis zum Aufwand. Außerdem bieten diese Ansätze keine Lösung für das Problem der Störung einzelner Empfänger eines Funk-Kommunikationssystems durch für andere Empfänger bestimmte Downlink-Signale.

Eine Lösung dieses Problems wird durch strahlformende Verfahren erreicht. Als Beispiel für ein solches Verfahren kann DE 198 03188 A1 genannt werden. Aus dieser Schrift ist ein Verfahren bekannt, bei dem eine räumliche Kovarianzmatrix für eine Verbindung von einer Basisstation zu einer Teilnehmerstation bestimmt wird. In der Basisstation wird ein Eigenvektor aus der Kovarianzmatrix berechnet und für die Verbindung als ein Strahlformungsvektor verwendet. Die Sendesignale für die Verbindung werden mit dem Strahlformungsvektor gewichtet und Antennenelementen zur Abstrahlung zugeführt.

Anschaulich gesprochen ermittelt dieses Verfahren in einer Umgebung mit Mehrwegausbreitung einen Ausbreitungsweg mit guten Übertragungseigenschaften und konzentriert die Sendeleistung der Basisstation räumlich auf diesen Ausbreitungsweg.

Dadurch kann jedoch nicht verhindert werden, daß Interferenzen auf diesem Übertragungsweg kurzfristig zu Signalauslöschungen und somit zu Unterbrechungen der Übertragung führen können.

Durch die gerichtete Abstrahlung des Downlink-Signals ist es bei diesem Verfahren möglich, Störungen anderer Empfänger durch ein nicht für sie bestimmtes Downlink-Signal erheblich zu reduzieren. Es kann jedoch nicht verhindert werden, daß Interferenzen auf dem gerichteten Ausbreitungsweg kurzfristig_ zu Signalauslöschungen und somit zu Unterbrechungen der Übertragung führen. Außerdem ist das Verfahren darauf angewiesen, daß dem Uplink-Signal eine Herkunftsrichtung zugeordnet werden kann, um das Downlink-Signal gezielt in diese abstrahlen zu können. Dies ist jedoch nicht überall möglich. Insbesondere in Mikrozellen, etwa innerhalb von Gebäuden, kann es infolge von Vielfachreflexion unmöglich sein, einem Uplink-Signal eine Herkunftsrichtung zuzuordnen. In einer solchen Umgebung sind durch Strahlformung keine besseren Übertragungsqualitäten erreichbar als durch ungerichtetes Senden.

Die Aufgabe der Erfindung besteht darin, ein Verfahren anzugeben, das es einem Sender in einem Funk-Kommunikationssystem erlaubt, einen Downlink-Strahl in einer jeweils an die aktuelle Sende- und Empfangssituation angepaßten Weise zu steuern.

Die Aufgabe wird durch das Verfahren mit dem Merkmal des Patentanspruchs 1 gelöst.

Das Verfahren ist in einer Basisstation eines Funk-Kommunikationssystems ausführbar, das eine Antenneneinrichtung mit mehreren Antennenelementen aufweist. Es sieht die Schritte des Untersuchens eines von einer Teilnehmerstation kommend empfangenen Uplink-Signals auf das Bestehen von Phasenkorrelationen zwischen von verschiedenen Antennenelementen der Antenneneinrichtung empfangenen Anteilen des Uplink-Signals und die Steuerung des Downlink-Strahls in Abhängigkeit von dem Ergebnis dieser Untersuchung vor. Wenn eine Phasenkorrelation festgestellt wird, wird dem Uplink-Signal wenigstens eine Herkunftsrichtung zugeordnet, und das Downlink-Signal wird gerichtet in diese Herkunftsrichtung gesendet. Wenn das Nichtbestehen einer Phasenkorrelation festgestellt wird, wird das Downlink-Signal ungerichtet in Form von mehreren Beiträgen gesendet, die unter Einsatz wenigstens einer Diversitätstechnik erzeugt werden. Diese Diversitätstechnik kann unter einer Vielzahl verschiedener möglicher Techniken wie etwa Zeit-Diversität, Antennen-Diversität, Code-Diversität, Frequenz-Diversität ausgewählt sein.

Vorteilhafte Ausgestaltungen sind Gegenstand von abhängigen Ansprüchen.

Falls bei Bestehen einer Phasenkorrelation zusätzlich das Bestehen eines direkten Übertragungsweges für das Uplink-Signal ermittelt wird, wird das Downlink-Signal zweckmäßigerweise ausschließlich in die Richtung des einen Uplink-Signals gesendet. In diesem Fall wird nur ein einziger Übertragungsweg für das Downlink-Signal genutzt, was aber aufgrund der geringen Anfälligkeit des direkten Übertragungsweges für schnelles Fading vertretbar ist und eine effektive Nutzung der verfügbaren Übertragungskanäle durch die Basisstation erlaubt.

Das Bestehen eines direkten Übertragungsweges ist für die Basisstation vorzugsweise erkennbar an der zeitlichen Unveränderlichkeit desjenigen Beitrags des Uplink-Signals, der die Basisstation mit der geringsten Laufzeit erreicht.

Wenn ein solcher direkter Übertragungsweg nicht vorhanden ist, ist es hingegen zweckmäßig, mehrere Herkunftsrichtungen des Uplink-Signals zu ermitteln und das Downlink-Signal in die mehreren Richtungen gerichtet zu senden, so daß in diesem Fall eine mögliche Auslöschung auf einem Übertragungsweg nicht zu einer Unterbrechung des Empfangs durch die Teilnehmerstation führen kann.

Bei der Untersuchung des Uplink-Signals auf das Bestehen von Phasenkorrelationen wird zweckmäßigerweise eine gemittelte räumliche Kovarianzmatrix der Anteile des Uplink-Signals erzeugt, und das Nichtbestehen von Phasenkorrelationen wird angenommen, wenn die gemittelte Kovarianzmatrix im wesentlichen diagonal ist. Dabei wird man von einer im wesentlichen diagonalen Matrix insbesondere dann sprechen, wenn die nichtdiagonalen Koeffizienten der Matrix in der Größenordnung der Meßgenauigkeit des zur Erzeugung der Kovarianzmatrix eingesetzten Verfahrens liegen.

Ein Ausführungsbeispiel wird nachfolgend anhand der Zeichnung näher erläutert. Es zeigen:

Fig. 1 ein Blockschaltbild eines Mobilfunknetzes

Fig. 2 ein Blockschaltbild der Basisstation;

Fig. 3 ein Diagramm des erfindungsgemäßen Verfahrens.

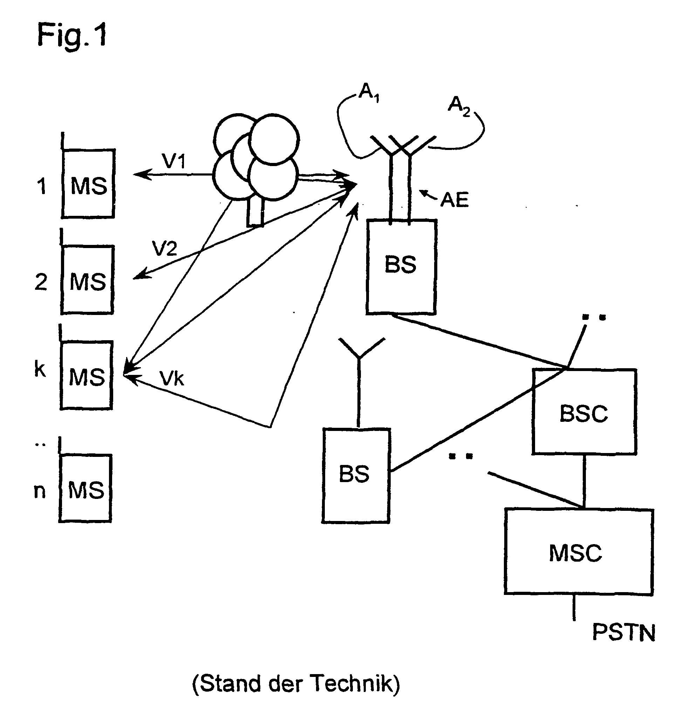

Figur 1 zeigt die Struktur eines Funk-Kommunikationssystems, bei dem das erfindungsgemäße Verfahren anwendbar ist. Es besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Hierfür sind wenigstens einzelne der Basisstationen BS mit Antenneneinrichtungen AE ausgerüstet, die mehrere Antennenelemente ($A_1$ - $A_M$) aufweisen.

In Fig. 1 sind beispielhaft Verbindungen V1, V2, ..., Vk zur Übertragung von Nutzinformationen und Signalisierungsinformationen zwischen Teilnehmerstationen MS1, MS2, .., MSk, .., MSn und einer Basisstation BS dargestellt. Unterschiedliche Übertragungswege der Verbindung $V_k$ sind durch Pfeile zwischen der Basisstation BS und der Teilnehmerstation MSk symbolisiert. Ein Operations- und Wartungszentrum OMC realisiert Kontroll- und Wartungsfunktionen für das Mobilfunknetz bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

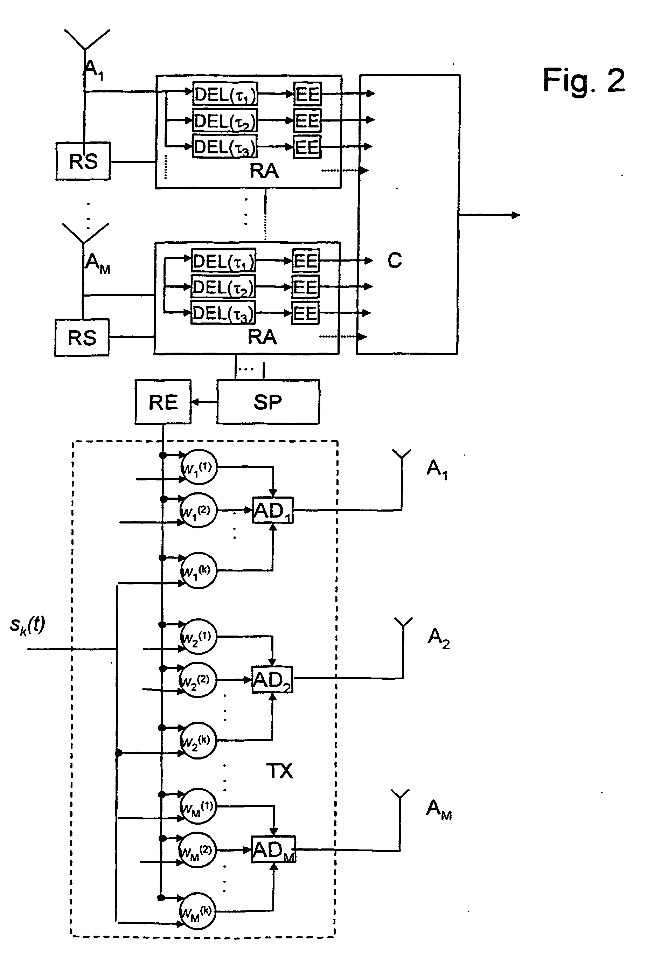

Figur 2 zeigt schematisch den Aufbau des Empfangsteils einer Basisstation BS zur Durchführung des erfindungsgemäßen Verfahrens. Die Basisstation BS umfaßt eine Antenneneinrichtung AE mit mehreren Antennenelementen $A_1$, $A_2$, ..., $A_M$, die das von der Teilnehmerstation MSk ausgestrahlte Uplink-Signal empfangen. Das ins Basisband umgesetzte Empfangssignal jedes Antennenelements wird einem sogenannten Rake Searcher RS zugeführt, der dazu dient, Laufzeitunterschiede von Beiträgen des Uplink-Signals zu messen, die das Antennenelement auf unterschiedlichen Ausbreitungswegen erreicht haben. Das Empfangssignal liegt ferner an einem Rake-Verstärker RA an, der eine Mehrzahl von Rake-Fingern umfaßt, von denen drei in der Figur dargestellt sind, und die jeweils ein Verzögerungsglied DEL und einen Entspreizer-Entscrambler EE aufweisen. Die Verzögerungsglieder DEL verzögern das Empfangssignal jeweils um einen vom Rake-Searcher RS gelieferten Verzögerungswert $\tau_1$, $\tau_2$, $\tau_3$, .... Die Entspreizer-Entscrambler EE liefern an ihren Ausgängen jeweils eine Folge von abgeschätzten Symbolen, wobei die Ergebnisse der Abschätzung für die einzelnen Entscrambler aufgrund unterschiedlicher Phasenlagen des Downlink-Signals zu Entscrambling- und Spreizcode in den einzelnen Fingern des Rake-Verstärkers unterschiedlich sein können.

Die von den Entspreizern-Entscramblern EE gelieferten Symbolfolgen bilden Eingangssignale eines Kombinierers C, der die Vielzahl von Symbolfolgen zu einer abgeschätzten Symbolfolge zusammenfügt.

In den von den Entspreizern-Entscramblern EE gelieferten Symbolfolgen sind auch die Ergebnisse der Abschätzung von Trainingssequenzen enthalten, die von den Teilnehmerstationen MS1, MS2, ..., MSk, ..., MSn ausgestrahlt werden, und die für die einzelnen Teilnehmerstationen quasi-orthogonal und charakteristisch sind. Ein Signalprozessor SP dient zum Vergleich der Ergebnisse der Abschätzung dieser Trainingssequenzen mit den der Basisstation bekannten, tatsächlich von den Teilnehmerstationen gesendeten Symbolen der Trainingssequenzen. Indem dieser Vergleich jeweils für jeden Finger des Rake-Verstärkers RA, d. h. für jede vom Rake-Searcher RS gefundene Verzögerung bzw. jeden Tap, einzeln durchgeführt wird, kann die Impulsantwort des Übertragungskanals zwischen Basisstation BS und Teilnehmerstation MSk für jedes Antennenelement $A_1$, $A_2$, ..., $A_M$ und jeden Tap einzeln erhalten werden. Der Signalprozessor SP fügt für jeden Tap die Impulsantworten aller Antennenelemente $A_1$, ..., $A_M$ in der z.B. aus der zitierten DE 198 03 188 bekannten Weise zu einer räumlichen Kovarianzmatrix $R_{xx}$ zusammen.

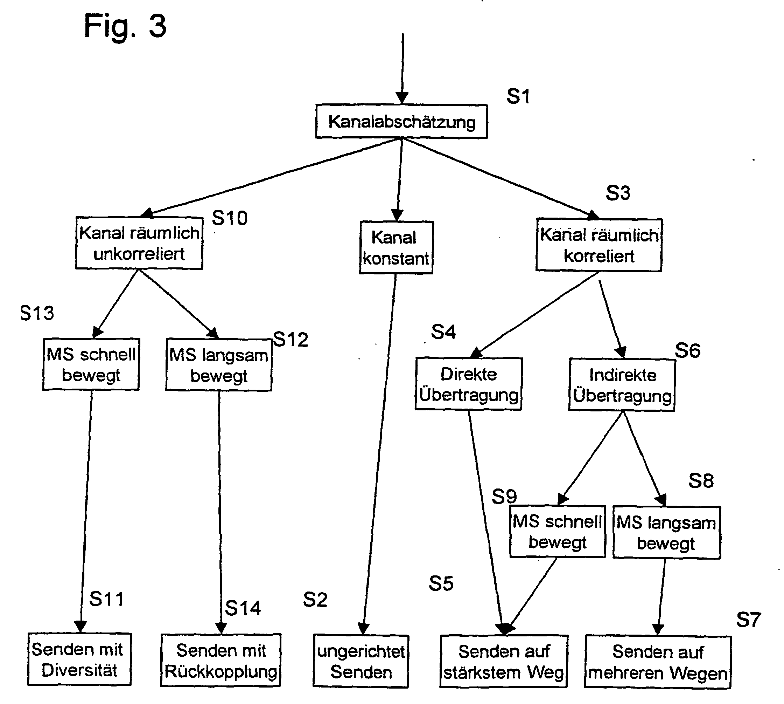

Die Auswertung der so erhaltenen Kovarianzmatrizen $R_{xx}$ durch eine Steuereinheit SE wird anhand des Diagramms der Figur 3 näher erläutert. Die Steuereinheit SE bildet zunächst einen Mittelwert $\bar{R}_{xx}$ über eine große Zahl von nacheinander erzeugten Kovarianzmatrizen $R_{xx}$, um die Einflüsse von schnellem Fading auf den Kanal auszumitteln. Ferner werden Schwankungsbreiten für Koeffizienten der Kovarianzmatrizen ermittelt (Schnitt S1, Kanalabschätzung). Falls diese Schwankungsbreiten kleiner als ein passend festzulegender Grenzwert sind, der Übertragungskanal sich also im Laufe der Zeit nicht ändert, so ist dies ein Hinweis darauf, daß die Teilnehmerstationen und auch Reflektoren, an denen das von der Teilnehmerstation ausgestrahlte Uplink-Signal auf seinem Wege zur Basisstation reflektiert wird, sich nicht bewegen. In einem solchen Fall ist die Ausmittelung des schnellen Fadings nicht möglich, und die Form der Kovarianzmatrix läßt keinen Rückschluß auf Kanaleigenschaften wie Herkunftsrichtung des Uplink-Signals, mittlere Dämpfung etc. zu.

Dieses Ergebnis wird von der Steuereinheit SE an das Sendeteil TX (Fig. 2) der Basisstation weitergegeben, um eine ungerichtete Ausstrahlung des Downlink-Signals zu veranlassen (Schritt S2). Aufgrund der langsamen Veränderlichkeit des Übertragungskanals ist es in diesem Fall möglich, daß die Teilnehmerstation MSk die Beiträge der einzelnen Antennenelemente in dem von ihr empfangenen Downlink-Signal identifiziert, einen Gewichtungsvektor $w^{(k)}$ für die Antennenelemente berechnet, die ihr einen optimalen Empfang ermöglichen, daß sie diesen Gewichtungsvektor $w^{(k)}$ an die Basisstation überträgt und die Basisstation das Downlink-Signal $S_k(t)$ vor dem Abstrahlen durch ein Antennenelement mit dem diesem Antennenelement $A_i$ zugeordneten Koeffizienten $w_i^{(k)}$, i=1, ..., M des Gewichtungsvektors multipliziert.

Wenn die Untersuchung der Schwankungsbreite der Koeffizienten der Kovarianzmatrix $\bar{R}_{xx}$ durch die Steuereinheit SE ergibt, daß der Übertragungskanal nicht konstant ist, so entscheidet die Steuereinheit SE, ob dem empfangenen Uplink-Signal eine Herkunftsrichtung zugeordnet werden kann. Diese Möglichkeit besteht immer dann, wenn eine Phasenbeziehung zwischen von verschiedenen Antennenelementen der Basisstation empfangenen Uplink-Signalen besteht, d.h., wenn die Kovarianzmatrix $\bar{R}_{xx}$ nichtverschwindende Komponenten abseits der Diagonalen aufweist. Die Information über die Herkunftsrichtung des Uplink-Signals ist in den Eigenvektoren der Kovarianzmatrix $\bar{R}_{xx}$ enthalten; ihre Koeffizienten geben die relativen Phasenlagen an, mit denen ein kohärentes Uplink-Signal die einzelnen Antennenelemente erreicht.

Wenn eine Phasenbeziehung zwischen den an den einzelnen Antennenelementen eintreffenden Uplink-Signalen existiert, mit anderen Worten, wenn der Kanal räumlich korreliert ist (Schritt S3), und die Steuereinheit SE dies an den nichtdiagonalen Elementen der Kovarianzmatrix $\bar{R}_{xx}$ erkennt, so ermittelt sie in der Folge, ob eine direkte Übertragungsverbindung zwischen der Basisstation und der Teilnehmerstation besteht. Ein solcher direkter Übertragungsweg ist immer der kürzeste mögliche Übertragungsweg, folglich kann unter mehreren zeitlich gegeneinander versetzten Beiträgen des empfangenen Uplink-Signals nur der früheste einer direkten Übertragungsverbindung entsprechen. Wenn dieser früheste Beitrag sich ferner durch eine konstante Amplitude auszeichnet, erkennt die Steuereinheit SE daran, daß ein direkter Übertragungsweg vorhanden ist (Schritt S4), und veranlaßt eine gerichtete Ausstrahlung des Downlink-Signals in die dem direkten Übertragungsweg entsprechende Herkunftsrichtung (Schritt S5). Falls Uplink und Downlink die gleichen Frequenzen benutzen, genügt es für eine solche Strahlformung des Downlink-Strahls, die von den einzelnen Antennenelementen abzustrahlenden Beiträge des Downlink-Signals mit den Koeffizienten desjenigen Eigenvektors $w^{(k)}$ zu gewichten, der diesem Übertragungsweg entspricht. Falls die Frequenzen von Uplink und Downlink unterschiedlich sind, können die Phasen der Komponenten dieses Eigenvektors in dem Fachmann vertrauter Weise in Laufzeitdifferenzen und diese unter Zugrundelegung der Downlink-Frequenz wiederum in Phasendifferenzen umgerechnet werden, um so einen Gewichtungsvektor $w^{(k)}$ für die Strahlformung des Downlink-Strahls zu erhalten.

Falls keine direkte Übertragungsverbindung zwischen Basisstation und Teilnehmerstation festgestellt wird (Schritt S6), die bestehenden Übertragungswege also wenigstens eine Reflexion beinhalten, so besteht die Gefahr, daß einer dieser Übertragungswege durch schnelles Fading kurzzeitig ausfällt. Diesem Problem wird begegnet, in dem die Steuereinheit SE in einem solchen Fall nicht nur einen einzigen Eigenvektor $w^{(k)}$ der Kovarianzmatrix ermittelt, sondern aus der Gesamtheit der Eigenvektoren der Kovarianzmatrix diejenigen auswählt, die die größten Eigenwerte aufweisen. Diese Eigenvektoren entsprechen den Übertragungswegen mit der geringsten Dämpfung. Durch gleichzeitiges Ausstrahlen des Downlink-Signals in die Herkunftsrichtungen von wenigstens zweien dieser Übertragungswege (Schritt S7) wird das Risiko einer Übertragungsunterbrechung minimiert.

Einer Weiterentwicklung der Erfindung zufolge kann die Steuereinheit SE im Falle des Nichtbestehens eines direkten Übertragungsweges zusätzlich eine Differenzierung in Abhängigkeit von der Geschwindigkeit vornehmen, mit der sich die Teilnehmerstation relativ zur Basisstation bewegt. Wenn diese Geschwindigkeit sehr groß ist, so führt dies zu einer inhärenten Zeit-Diversität, weil die Teilnehmerstation sich an Stellen, an denen eine destruktive Interferenz des Downlink-Signals stattfindet, jeweils nur sehr kurz aufhält, und dadurch bedingte Empfangsunterbrechungen durch Fehlerkorrektur kompensiert werden können. Die Steuereinheit ist in der Lage, die Bewegungsgeschwindigkeit der Teilnehmerstation anhand der Geschwindigkeit abzuschätzen, mit der sich die Eigenvektoren der gemittelten räumlichen Kovarianzmatrix ändern. Wenn diese Geschwindigkeit unter einem gegebenen Grenzwert bleibt, die Teilnehmerstation sich also langsam bewegt (Schritt S8), wird der Downlink-Strahl auf mehreren Übertragungswegen gleichzeitig abgestrahlt (Schritt S7), wenn die Geschwindigkeit der Teilnehmerstation größer ist (Schritt S9), wird nur in Richtung des Übertragungsweges mit der geringsten Dämpfung abgestrahlt (Schritt S5).

Wenn sich der Kanal als räumlich unkorreliert erweist (Schritt S10), ist durch auf die gemittelte räumliche Kovarianz gestützte Strahlformung keine Verbesserung der Ubertragungsqualität zu erreichen. In einem solchen Fall veranlaßt die Steuereinheit gemäß einer einfacheren Ausgestaltung des Verfahrens die Ausstrahlung des Downlink-Signals unter Verwendung einer oder mehreren Diversitätstechniken wie etwa OTD, TSTD oder STD (Schritt S11).

Einer Weiterbildung des Verfahrens zufolge kann zusätzlich zwischen schnell und langsam bewegten Teilnehmerstationen unterschieden werden, wobei die Verwendung der genannten Diversitätstechniken Schritt S11) auf schnell bewegte Teilnehmerstationen (Schritt S13) beschränkt bleibt. Im Falle einer langsam bewegten Teilnehmerstation (Schritt S12), bei der sich auch die Eigenschaften des Übertragungskanals langsam ändern, ist wie im bereits oben behandelten Fall des unveränderlichen Kanals die Ausstrahlung des Downlink-Signals unter Verwendung von durch Rückkopplung von der Teilnehmerstation optimierten Gewichtungsvektoren (Schritt S14) bevorzugt. Auf diese Weise ist ein gerichtetes Abstrahlen des Downlink-Signals auch in solchen Situationen möglich, wo das Uplink-signal zu jeder Zeit oder zumindest meistens eine Herkunftsrichtung besitzt, diese Herkunftsrichtung jedoch so schnell variiert, daß sie in der gemittelten Kovarianzmatrix $\bar{R}_{xx}$ nicht mehr erkennbar ist.

**Patentansprüche**

1. Verfahren zum Steuern des Downlinkstrahls in einem Funk-Kommunikationssystem mit einer mehrere Antennenelemente umfassenden Antenneneinrichtung (AE), **gekennzeichnet durch** die Schritte

   a) Untersuchen eines von einem Sender (MSk) kommend empfangenen Uplink-Signals auf das Bestehen von Phasenkorrelationen zwischen von verschiedenen Antennenelementen der Antenneneinrichtung (AE) empfangenen Anteilen des Uplink-Signals, und
   b) bei Bestehen einer Phasenkorrelation, Zuordnen wenigstens einer Herkunftsrichtung zum Uplinksignal und gerichtetes Senden des Downlinksignals in die Herkunftsrichtung, und

   bei Nichtbestehen einer Phasenkorrelation ungerichtetes Senden des Downlinksignals in Form von mehreren unter Einsatz wenigstens einer Diversitätstechnik erzeugten Beiträgen.

2. Verfahren nach Anspruch 1, **dadurch gekennzeichnet, daß** bei konstantem Kanal das Downlink-Signal ungerichtet in Form von mehreren unter Anwendung wenigstens einer Diversitätstechnik erzeugter Beiträge gesendet wird.

3. Verfahren nach Anspruch 1 oder 2, **dadurch gekennzeichnet, daß** die Diversitätstechnik unter Zeitdiversität, Antennen-diversität, Codediversität, Frequenzdiversität ausgewählt wird.

4. Verfahren nach Anspruch 2 und Anspruch 3, **dadurch gekennzeichnet, daß** bei konstantem und/oder langsam veränderlichem Kanal eine Information über im Downlink-Signal zu verwendende relative Sendeleistungen der Beiträge im Uplink-Signal übertragen wird.

5. Verfahren nach einem der vorhergehenden Ansprüche, **dadurch gekennzeichnet, daß** bei Bestehen einer Phasenkorrelation und Bestehen eines direkten Übertragungsweges für das Uplink-Signal die Herkunftsrichtung des Uplink-Signals ermittelt und das Downlinksignal ausschließlich in die Richtung des einen Uplink-Signals gesendet wird.

6. Verfahren nach Anspruch 5, **dadurch gekennzeichnet, daß** das Bestehen eines direkten Übertragungsweges festgestellt wird, wenn die Amplitude des zeitlich frühesten Beitrags des Uplink-Signals zeitlich unveränderlich ist.

7. Verfahren nach einem der vorhergehenden Ansprüche, **dadurch gekennzeichnet, daß** bei Bestehen einer Phasenkorrelation und Nichtbestehen eines direkten Übertragungsweges für das Uplink-Signal mehrere Herkunftsrichtungen des Uplink-Signals ermittelt und das Downlinksignal in die mehreren Richtungen jeweils gerichtet gesendet wird.

8. Verfahren nach Anspruch 7, **dadurch gekennzeichnet, daß** die Geschwindigkeit der Änderung der Herkunftsrichrtungen erfaßt wird und daß das Downlink-Signal nur in die Herkunftsrichtung des stärksten Beitrags zum Uplink-Signal gesendet wird, wenn die Geschwindigkeit einen Grenzwert übersteigt.

9. Verfahren nach einem der vorhergehenden Ansprüche, **dadurch gekennzeichnet, daß** bei der Untersuchung des Uplink-Signals auf das Bestehen von Phasenkorrelationen eine gemittelte Kovarianzmatrix der Anteile des Uplink-Signals erzeugt und das Nichtbestehen von Phasenkorrelation angenommen wird, wenn die gemittelte Kovarianzmatrix im wesentlichen diagonal ist.

**Claims**

1. Method for controlling the downlink beam in a radio communications system having an antenna device (AE) which has a number of antenna elements, **characterized by** the following steps:

   a) investigation of a received uplink signal coming from a transmitter (MSk) for the existence of phase correlation between components of the uplink signal received by different antenna elements in the antenna device (AE), and
   b) if phase correlation exists, association of at least one source direction with the uplink signal and directional transmission of the downlink signal in the source direction, and

if no phase correlation exists, nondirectional transmission of the downlink signal in the form of a number of contributions produced using at least one diversity technique.

2. Method according to Claim 1, **characterized in that**, for a constant channel, the downlink signal is transmitted nondirectionally in the form of a number of contributions which are produced using at least one diversity technique.

3. Method according to Claim 1 or 2, **characterized in that** the diversity technique is chosen from time diversity, antenna diversity, code diversity and frequency diversity.

4. Method according to Claim 2 and Claim 3, **characterized in that**, for a constant and/or slowly changing channel, information is transmitted in the uplink signal using relative transmission power levels of the contributions as can be used in the downlink signal.

5. Method according to one of the preceding claims, **characterized in that**, if a phase correlation exists, and if a direct transmission path exists for the uplink signal, the source direction of the uplink signal is determined, and the downlink signal is transmitted only in the direction of that uplink signal.

6. Method according to Claim 5, **characterized in that** the existence of a direct transmission path is established when the amplitude of the earliest contribution of the uplink signal in time does not vary with time.

7. Method according to one of the preceding claims, **characterized in that**, if phase correlation exists but no direct transmission path exists for the uplink signal, a number of source directions of the uplink signal are determined, and the downlink signal is transmitted directionally in each of a number of directions.

8. Method according to Claim 7, **characterized in that** the rate of change of the source directions is recorded, and **in that** the downlink signal is transmitted only in the source direction of the strongest contribution to the uplink signal, when the rate exceeds a limit value.

9. Method according to one of the preceding claims, **characterized in that**, in the investigation of the uplink signal for the existence of phase correlation, an averaged covariance matrix of the components of the uplink signal is produced, and it is assumed that no phase correlation exists if the averaged covariance matrix is essentially diagonal.

**Revendications**

1. Procédé pour la commande du faisceau de liaison descendante dans un système de radiocommunication comprenant un dispositif d'antenne (AE) comprenant plusieurs éléments d'antenne, **caractérisé par** les étapes suivantes

   a) analyse d'un signal ascendant reçu d'un émetteur (MSK) au niveau de l'existence de corrélations de phases entre des parties du signal ascendant reçues de différents éléments d'antenne du dispositif d'antenne (AE), et
   b) en cas d'existence d'une corrélation de phases, attribution d'au moins une direction d'origine au signal ascendant et émission dirigée du signal descendant dans la direction d'origine, et

en cas de non-existence d'une corrélation de phases, émission non dirigée du signal descendant sous la forme de plusieurs apports générés avec l'utilisation d'au moins une technique de diversité.

2. Procédé selon la revendication 1, **caractérisé en ce que**, avec un canal constant, le signal descendant est émis de façon non dirigée sous la forme de plusieurs apports générés avec l'utilisation d'au moins une technique de diversité.

3. Procédé selon la revendication 1 ou 2, **caractérisé en ce que** la technique de diversité est choisie parmi la diversité de temps, la diversité d'antenne, la diversité de code, la diversité de fréquence.

4. Procédé selon la revendication 2 et la revendication 3, **caractérisé en ce que**, avec un canal constant et/ou variable lentement, une information concernant des puissances d'émission relatives des apports, à utiliser dans le signal descendant, est transmise dans le signal ascendant.

5. Procédé selon l'une quelconque des revendications précédentes, **caractérisé en ce que**, en cas d'existence d'une corrélation de phases et d'existence d'un trajet de transmission direct pour le signal ascendant, la direction d'origine du signal ascendant est déterminée et le signal descendant est envoyé exclusivement dans la direction de l'un signal ascendant.

6. Procédé selon la revendication 5, **caractérisé en ce que** l'existence d'un trajet de transmission direct est constatée lorsque l'amplitude de l'apport la plus précoce dans le temps du signal ascendant est non variable dans le temps.

7. Procédé selon l'une quelconque des revendications précédentes, **caractérisé en ce que**, en cas d'existence d'une corrélation de phases et de non-existence d'un trajet de transmission direct pour le signal ascendant, plusieurs directions d'origine du signal ascendant sont déterminées et le signal descendant est envoyé orienté respectivement dans plusieurs directions.

8. Procédé selon la revendication 7, **caractérisé en ce que** la vitesse de variation des directions d'origine est enregistrée et **en ce que** le signal descendant est envoyé uniquement dans la direction d'origine de l'apport le plus important au signal ascendant, lorsque la vitesse dépasse une valeur limite.

9. Procédé selon l'une quelconque des revendications précédentes, **caractérisé en ce que**, lors de l'analyse du signal ascendant au niveau de l'existence de corrélations de phases, une matrice de covariance moyenne des parties du signal ascendant est générée et la non-existence de corrélations de phases est supposée lorsque la matrice de covariance moyenne est sensiblement diagonale.

# Fig.1

(Stand der Technik)

Fig. 2

# Fig. 3

```
                    S1
              Kanalabschätzung

  S10                              S3
Kanal räumlich    Kanal        Kanal räumlich
unkorreliert      konstant     korreliert

S13          S12         S4              S6
MS schnell  MS langsam   Direkte      Indirekte
bewegt      bewegt       Übertragung  Übertragung

                                     S9        S8
                                   MS schnell  MS langsam
                                   bewegt      bewegt

S11        S14        S2        S5                      S7
Senden mit Senden mit ungerichtet Senden auf   Senden auf
Diversität Rückkopplung Senden   stärkstem Weg  mehreren Wegen
```